# EUROPÄISCHE PATENTANMELDUNG

(11) **EP 2 327 879 A2**
(43) Veröffentlichungstag der Anmeldung: **01.06.2011**
(21) Anmeldenummer: 10191703.7
(22) Anmeldetag: 18.11.2010
(51) Int. Cl.: F03D 11/00

(54) **Dichtringe für eine Labyrinthdichtung**

(30) Priorität: 27.11.2009 DE 102009055914
(71) Anmelder: Rolls-Royce Deutschland Ltd & Co KG, 15827 Blankenfelde-Mahlow (DE)
(72) Erfinder: Haubold, Thomas, 61273, Wehrheim (DE); Kohns, Andreas, 60435 Frankfurt (DE)

(57) **Zusammenfassung**

Bei Dichtringen für eine Labyrinthdichtung, die an einem rotationssymmetrischen Bauteil angebracht sind und in Reibkontakt mit einer stationären Einlaufschicht sind, ist der die Einlaufschicht kontaktierende Teil des Dichtringes (8) als auf einem Dichtringstumpf (14) aufgebauter Verschleißschutz-Ringabschnitt (15) mit in eine Metallmatrix (16) eingebetteten Verschleißschutzpartikeln (13) ausgebildet. Die Herstellung des Verschleißschutz-Ringabschnitts erfolgt durch Laserauftragsschweißen, wobei der Anteil der in dem einem Laserstrahl zugeführten Metallpulverstrom enthaltenen Verschleißschutzpartikel steuerbar ist. (Fig. 3)

## Beschreibung

Die Erfindung bezieht sich auf Dichtringe für eine Labyrinthdichtung, die an einem rotationssymmetrischen Bauteil angebracht sind und in Reibkontakt mit einer stationären Einlaufschicht sind, insbesondere für Fluggasturbinen.

Labyrinthdichtungen sind als Glattspaltlabyrinth oder Stolperbundlabyrinth ausgeführte, im Prinzip berührungslose Wellendichtungen, deren Dichtwirkung auf der Verlängerung des Dichtweges aufgrund der Anordnung bzw. wechselseitigen Anordnung von Dichtringen (umlaufenden steifen Dichtlippen) an dem rotierenden Teil und/oder dem feststehenden Gehäuseteil beruht. Bei stationären Gasturbinen und Flugtriebwerken sollen die im Bereich der Verdichter und Turbinen ausgebildeten Labyrinthdichtungen ein Zurückströmen der Luft verhindern und für einen minimalen Druckverlust und damit eine hohe Effizienz der Gasturbine sorgen. Ein entsprechendes Dichtsystem für Gasturbinen umfasst an den Rotorschaufelspitzen vorgesehene - am Außenumfang des Rotors nebeneinander liegende Dichtringe bildende - Dichtstege und an einer Welle oder den Verbindungsflanschen zwischen den Rotorscheiben ausgebildete, nebeneinander angeordnete Dichtringe, die mit der Innenumfangsfläche einer fest in der Gasturbine montierten Einlaufschicht zusammenwirken. Beim Einlaufen der Gasturbine reiben die rotierenden Dichtringe an der gegenüberliegenden Einlaufschicht und schneiden sich in diese ein, um so einen minimalen Spaltabstand zu erreichen. Aufgrund der thermischen Dehnung der Teile und einer natürlichen Biegung kann der Abstand zwischen der Einlaufschicht und den Dichtringen während des Betriebs der Gasturbine jedoch schwanken.

Infolge der Reibung zwischen der Einlaufschicht und den Dichtringen kommt es zu einer Abnutzung des oberen, in die Einlaufschicht eingreifenden Teils der Dichtringe, so dass die erforderliche Dichtwirkung nicht mehr gewährleistet ist und die Dichtringe neu aufgebaut werden müssen. Das erfolgt in der Weise, dass etwa zwei Drittel des Dichtrings abgeschnitten werden, danach der Dichtring aus dem gleichen Material durch Laserauftragsschweißen wieder aufgebaut wird und anschließend eine Nachbearbeitung erfolgt. Dieses Reparaturverfahren ist zum einen aufwändig und bietet zudem keinen künftigen Verschleißschutz. Zum Schutz der Dichtringe (oder Schaufelspitzen) vor Verschleiß ist es weiterhin bekannt, den die Einlaufschicht kontaktierenden Bereich der Dichtringe mit einer Verschleißschutzschicht zu versehen, die in einem galvanischen oder elektrolytischen Verfahren auf die zunächst mit einem Aufmaß gefertigten und wieder abgedrehten Dichtringe aufgebracht wird. Dieses Verfahren ist jedoch sehr zeit- und kostenaufwändig. Zudem ist die Zugänglichkeit zu den dem Verschleiß ausgesetzten, zu beschichtenden Flächen begrenzt, so dass beim Plasmaspritzen nicht in jedem Fall eine gleichmäßige Beschichtung mit dem Verschleißschutzmittel und ein ausreichender Verschleißschutz gewährleistet sind.

Der Erfindung liegt die Aufgabe zugrunde, in Reibkontakt mit einer Einlaufschicht (Reibpartner) stehende Dichtringe für eine insbesondere für Gasturbinen vorgesehene Labyrinthdichtung so auszubilden, das ein hoher Verschleißschutz gewährleistet ist, sowie ein Verfahren zur kostengünstigen Fertigung von hochverschleißfesten Dichtringen anzugeben.

Erfindungsgemäß wird die Aufgabe mit gemäß den Merkmalen des Patentanspruchs 1 ausgebildeten Dichtringen sowie mit einem Verfahren zur Fertigung derartiger Dichtringe gemäß

Patentanspruch 6 gelöst. Vorteilhafte Weiterbildungen der Erfindung sind Gegenstand der Unteransprüche.

Der Grundgedanke der Erfindung besteht darin, dass der während des Betriebs in Reibkontakt mit einem Reibpartner gelangende Teil der Dichtringe als auf einem Dichtringstumpf aufgebauter Verschleißschutz-Ringabschnitt, bestehend aus einer Metallmatrix mit in diese eingebetteten Verschleißschutzpartikeln, ausgebildet ist. Die so ausgebildeten Dichtringe zeichnen sich im gesamten Kontaktbereich mit der Einlaufschicht durch geringen Verschleiß aus und gewährleisten über einen langen Zeitraum eine hohe Dichtwirkung.

Die Herstellung der erfindungsgemäßen Dichtringe erfolgt derart, dass an einem rotationssymmetrischen Bauteil zunächst nur Dichtringstümpfe ausgeformt werden und den Dichtungsstümpfen ein Gemisch aus mit Verschleißschutzpartikeln versetztem Metallpulver schichtweise zugeführt und das Metallpulver durch einen Laserstrahl aufgeschmolzen wird. Das Verfahren ist deutlich kostengünstiger als andere Verschleißschutzverfahren und sorgt zudem für einen verbesserten Verschleißschutz. Es kann zudem bei der Reparatur verschlissener Dichtringe eingesetzt werden.

In weiterer Ausbildung der Erfindung kann der Anteil der Verschleißschutzpartikel in dem Verschleißschutz-Ringabschnitt entsprechend der Belastung zum Rand und/oder zur Spitze des Dichtringes hin größer als in anderen - weniger oder nicht dem Verschleiß ausgesetzten - Bereichen sein.

Vorzugsweise ist die Anordnung der Verschleißschutzpartikel auf den Randbereich des Verschleißschutz-Ringabschnitts beschränkt.

In weiterer Ausbildung der Erfindung besteht die Metallmatrix aus dem gleichen Material wie der Dichtungsstumpf oder auch aus einem anderen Werkstoff. Vorzugsweise bestehen die Verschleißschutzpartikel aus kubischem Bornitrid (CBN).

Gemäß dem erfindungsgemäßen Verfahren ist der Anteil der in dem dem Laserstrahl zugeführten Metallpulverstrom enthaltenen Verschleißschutzpartikel regelbar, so dass in bestimmten Bereichen des Dichtringes eine besonders hohe Verschleißschutzwirkung erzielt werden kann.

In weiterer Ausbildung der Erfindung wird nach dem Aufbau der Verschleißschutz-Ringabschnitte auf den Dichtringstümpfen eine Wärmebehandlung des gesamten rotationssymmetrischen Bauteils oder eine lokale Wärmebehandlung im Bereich der Dichtringe durchgeführt. Unter bestimmten Voraussetzungen, beispielsweise bei Verwendung eines von dem Basiswerkstoff abweichenden Materials für die Metallmatrix mit den eingebetteten Verschleißschutzpartikeln kann auf die Wärmebehandlung auch verzichtet werden.

Ein Ausführungsbeispiel der Erfindung wird anhand der Zeichnung, in der
Fig. 1 eine Teilansicht der Turbine eines Flugtriebwerks mit in diesem Bereich angeordneten Labyrinthdichtungen;
Fig. 2 eine bildliche Darstellung des Verfahrensablaufs zur Ausbildung von Dichtringen;
Fig. 3 eine schematische Schnittansicht eines Dichtrings mit über dessen Höhe gradierter Verteilung der Verschleißschutzpartikel; und
Fig. 4 eine schematische Schnittansicht eines Dichtrings mit auf dessen Randbereich beschränkter Einbindung von Verschleißschutzpartikeln.

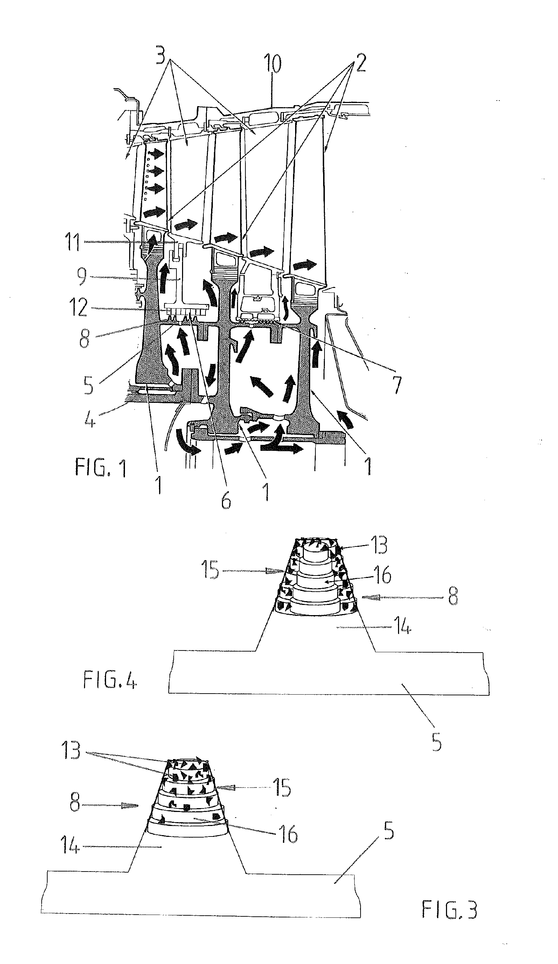

In der in Fig. 1 gezeigten Teilansicht der Turbine eines Flugtriebwerks geben die Pfeile die Strömungsrichtung der Turbinenkühlluft wieder. Mit dem Bezugszeichen 1 sind die Turbinenscheiben und mit dem Bezugszeichen 2 sind die Turbinenschaufeln bezeichnet. Den Turbinenschaufeln 2 sind jeweils Leitschaufeln 3 zugeordnet. Die an eine Turbinenwelle 4 angeschossenen Turbinenscheiben 1 sind untereinander durch Verbindungsflansche 5 verbunden. In dem Bereich zwischen den Turbinenscheiben 1 sind eine erste Labyrinthdichtung 6 und eine zweite Labyrinthdichtung 7 angeordnet, die für einen möglichst geringen Druckverlust zwischen den beiden Turbinenstufen sorgen. Die Labyrinthdichtungen 6, 7 umfassen an den jeweiligen Verbindungsflansch 5 angeformte, nebeneinander angeordnete, sich zum freien Ende hin verjüngende Dichtringe 8 (Dichtlippen), die zusammen mit den Turbinenscheiben 1 rotieren. Bei der ersten Labyrinthdichtung 6 ist eine feststehende, über ein Halteelement 9 an einem mit dem Triebwerksgehäuse 10 verbundenen Stator 11 fixierte Einlaufschicht 12 erkennbar, die hier aus einer Honigwabenstruktur besteht, aber auch aus einem anderen geeigneten Reibpartner, beispielsweise Feltmetal, das ein Eindringen der Spitzen der Dichtringe 8 in die Einlaufschicht 12 erlaubt, gebildet sein kann. Auf diese Weise kann der Dichtspalt der Labyrinthdichtung 6 sehr klein gehalten werden..

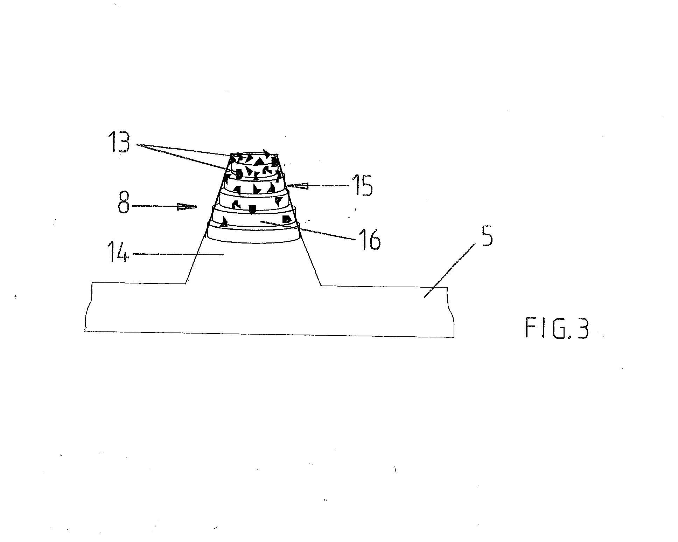

Dem durch den Reibkontakt zwischen den Dichtringen 8 und der Einlaufschicht 12 zu erwartenden Verschleiß der Dichtringe 8 wird dadurch begegnet, dass in den oberen, einem Reibkontakt mit der Einlaufschicht 12 ausgesetzten Teil der Dichtringe 8 - beispielsweise aus einem kubischen Bornitrid bestehende - Verschleißschutzpartikel 13 bestehen, eingebunden sind. Der Anteil der im oberen Teil der Dichtringe 8 in eine Metallmatrix 16 eingebundenen Verschleißschutzpartikel 13 kann, wie Fig. 3 zeigt, zur Spitze der Dichtringe 8 hin immer größer werden. Darüber hinaus kann, wie Fig. 4 zeigt, die Einbindung von Verschleißschutzpartikeln 13 im oberen Teil der Dichtringe 8 auf deren Randbereich beschränkt sein. Zudem kann auch in diesem Fall der Anteil der Verschleißschutzpartikel 13 im Randbereich von unten nach oben zunehmen.

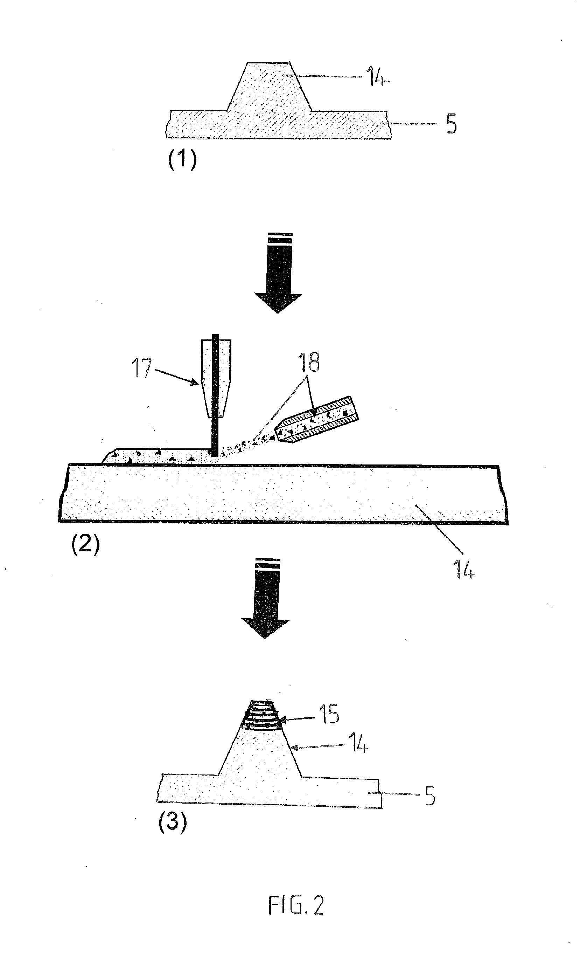

Die Herstellung der zuvor beschriebenen Dichtringe 8 erfolgt derart, dass bei der Fertigung eines mit Dichtringen 8 versehenen rotationssymmetrischen Bauteils wie beispielsweise einer Turbinenscheibe 1 für ein Flugtriebwerk, an dem Bauteil, hier dem Verbindungsflansch 5 zwischen zwei Turbinenscheiben 1, zunächst lediglich Dichtringstümpfe 14 ausgeformt werden und daran anschließend auf den Dichtringstümpfen 14 durch Laserauftragsschweißen ein Verschleißschutz-Ringabschnitt 15, bestehend aus in eine Metallmatrix 16 eingebundenen Verschleißschutzpartikeln 13, aufgebaut wird. Der Aufbau des Verschleißschutz-Ringabschnitts 15 auf dem jeweiligen Dichtringstumpf 14 erfolgt, wie Fig. 2 zeigt, mit Hilfe eines über eine Pulverdüse 17 einem Laserstrahl zu geführten Metallpulver-Verschleißschutzpartikel-Gemisches 18. Das aus dem Sockelwerkstoff bestehende Metallpulver wird durch den Laserstrahl aufgeschmolzen und bildet die Metallmatrix 16, in die die Verschleißschutzpartikel 13 eingebettet sind. Bei dem Schicht für Schicht erfolgenden Aufbringen des aufgeschmolzenen Metallpulvers kann der Anteil der Verschleißschutzpartikel 13 in dem Metallpulver-Verschleißschutzpartikel-Gemisch 18 so gesteuert werden, dass deren Anteil in jeder nachfolgenden Schicht immer größer wird (Fig. 3) oder sich die Verschleißschutzpartikel 13 nur im Randbereich des auf dem Dichtringstumpf 14 erzeugten Verschleißschutz-Ringabschnittes 15 befinden. Nach der vollständigen Ausbildung des Verschleißschutz-Ringabschnittes 15 erfolgt eine Wärmebehandlung (Spannungsarmglühen) des gesamten Bauteils oder auch nur eine lokale Wärmebehandlung, auf die bei optimierten Prozessparametern gegebenenfalls auch verzichtet werden kann. Es ist auch denkbar, dass das zur Herstellung des Verschleißschutz-Ringabschnitts 15 eingesetzte Metallpulver nicht aus dem Stumpfwerkstoff besteht, sondern aus einem anderen Werkstoff.

### Bezugszeichenliste

1 Turbinenscheibe
2 Turbinenschaufel
3 Leitschaufeln
4 Turbinenwelle
5 Verbindungsflansch
6 Erste Labyrinthdichtung
7 Zweite Labyrinthdichtung
8 Dichtringe
9 Halteelement
10 Triebwerksgehäuse
11 Stator
12 Einlaufschicht (Reibpartner)
13 Verschleißschutzpartikel
14 Dichtungsstumpf
15 Verschleißschutz-Ringabschnitt
16 Metallmatrix
17 Pulverdüse
18 Metallpulver-Verschleißpartikel-Gemisch

## Patentansprüche

1. Dichtringe für eine Labyrinthdichtung, die an einem rotationssymmetrischen Bauteil angebracht sind und in Reibkontakt mit einer stationären Einlaufschicht sind, insbesondere für Fluggasturbinen, **dadurch gekennzeichnet, dass** der in Reibkontakt mit der Einlaufschicht stehende Teil des Dichtringes (8) als auf einem Dichtringstumpf (14) aufgebauter Verschleißschutz-Ringabschnitt (15) mit in eine Metallmatrix (16) eingebetteten Verschleißschutzpartikeln (13) ausgebildet ist.

2. Dichtringe nach Anspruch 1, **dadurch gekennzeichnet, dass** der Anteil der Verschleißschutzpartikel (13) zum Rand und/oder zur Spitze des Verschleißschutz-Ringabschnitts (15) größer wird.

3. Dichtringe nach Anspruch 1, **dadurch gekennzeichnet, dass** die Anordnung der Verschleißschutzpartikel (13) auf den Randbereich des Verschleißschutz-Ringabschnitts (15) beschränkt ist.

4. Dichtringe nach Anspruch 1, **dadurch gekennzeichnet, dass** die Metallmatrix (16) aus dem gleichen Material wie der Dichtringstumpf (14) oder einem anderen Werkstoff besteht.

5. Dichtringe nach Anspruch 1, **dadurch gekennzeichnet, dass** die Verschleißschutzpartikel (13) aus kubischem Bornitrid (CBN) bestehen.

6. Verfahren zur Herstellung von Dichtringen nach Anspruch 1, **dadurch gekennzeichnet, dass** an dem rotationssymmetrischen Bauteil zunächst nur Dichtringstümpfe (14) ausgeformt werden und den Dichtringstümpfen (14) ein Metallpulver-Verschleißschutzpartikel-Gemisch (18) schichtweise zugeführt und das Metallpulver durch einen Laserstrahl aufgeschmolzen wird.

7. Verfahren nach Anspruch 6, **dadurch gekennzeichnet, dass** während des Schichtaufbaus auf dem Dichtringstumpf der Anteil der in dem dem Laserstrahl zugeführten Metallpulverstrom enthaltenen Verschleißschutzpartikel (13) regelbar ist.

8. Verfahren nach Anspruch 6, **dadurch gekennzeichnet, dass** nach dem Aufbau der Verschleißschutz-Ringabschnitte gegebenenfalls eine Wärmebehandlung des gesamten Bauteils oder eine lokale Wärmebehandlung im Bereich der Dichtringe durchgeführt wird.
